**Europäisches Patentamt**

**European Patent Office**

**Office européen des brevets**

(19)

(11) Veröffentlichungsnummer: **0 189 892**
**B1**

(12) # EUROPÄISCHE PATENTSCHRIFT

(45) Veröffentlichungstag der Patentschrift:
**02.11.88**

(51) Int. Cl.⁴: **B 60 K 7/00**

(21) Anmeldenummer: **86101091.6**

(22) Anmeldetag: **28.01.86**

(54) **Raduntersetzungsgetriebe für eine Antriebsachse.**

(30) Priorität: **29.01.85 BG 68592/85**

(43) Veröffentlichungstag der Anmeldung:
**06.08.86 Patentblatt 86/32**

(45) Bekanntmachung des Hinweises auf die Patenterteilung:
**02.11.88 Patentblatt 88/44**

(84) Benannte Vertragsstaaten:
**BE DE FR GB IT SE**

(56) Entgegenhaltungen:
**AT-B-228 584**
**AT-B-257 313**
**GB-A-1 542 215**
**US-A-4 315 556**
**US-A-4 330 045**

(73) Patentinhaber: **MK "BALKAN", 5500 Lovetch (BG)**

(72) Erfinder: **Panov, Panko Nikolov, 47, Tzar**
**Osvoboditel, BG- 5500 Lovetch (BG)**
Erfinder: **Tchilev, Nasko Gantchev, 5, II.**
**Makariopolski Strasse, BG- 5500 Lovetch (BG)**

(74) Vertreter: **Finck, Dieter, Patentanwälte v. Füner,**
**Ebbinghaus, Finck Mariahilfplatz 2 & 3, D-8000**
**München 90 (DE)**

EP 0 189 892 B1

LIBER, STOCKHOLM 1988

**Beschreibung**

Die Erfindung betrifft ein Raduntersetzungsgetriebe für eine Antriebsachse, welches eine Halbwelle mit einem zentralen Zahnrad eines Planetengetriebes aufweist, mit Satellitenzahnrädern, deren Achsen an einem Steg befestigt sind, wobei an der Halbwelle mit einer Keilschlitznabe bewegliche Scheiben einer Scheibenbremse mit hydraulischer Betätigung angebracht sind.

Ein solches Raduntersetzungsgetriebe wird bei Fördermitteln, insbesondere Elektro- und Motorkarren eingesetzt.

Es ist bereits ein Raduntersetzungsgetriebe für eine Antriebsachse bekannt, welches eine Halbwelle mit dem zentralen Zahnrad eines Planetengetriebes aufweist, dessen Satellitenzahnräder mit Achsen in einem Steg gelagert sind. An der Halbwelle sind mit Keilprofilnaben die beweglichen Scheiben einer hydraulisch betätigbaren Scheibenbremse angebracht, deren feststehende Scheiben zusammen mit dem Zahnkranz des Planetengetriebes an dem Träger der Antriebsachse befestigt sind. Der Steg ist an einer Nabe befestigt, die auf dem Träger der Antriebsachse hinter der Scheibenbremse gelagert ist.

Nachteilig bei diesem Raduntersetzungsgetriebe sind sein komplizierter Aufbau, der große erforderliche Materialeinsatz und die sich ergebenden großen Außenabmessungen.

Der Erfindung liegt die Aufgabe zugrunde, den Aufbau des Raduntersetzungsgetriebes der eingangs genannten Art zu vereinfachen, um so die für die Fertigung erforderliche Metallmasse reduzieren zu können.

Diese Aufgabe wird ausgehend von dem Raduntersetzungsgetriebe der eingangs genannten Art dadurch gelöst, daß die Achsen der Satellitenzahnräder beidseitig in dem Steg befestigt sind, der seinerseits beidseitig in einem Gehäuse gelagert ist, in dessen einem Ende ein Zahnkranz des Planetengetriebes starr befestigt ist, und dessen anderes Ende an dem Träger der Antriebsachse befestigt ist.

Bevorzugt ist dabei im anderen Ende des Gehäuses eine Nabe mit inneren Keilschlitzen befestigt, welche die feststehenden Scheiben der Scheibenbremse trägt, während ihre beweglichen Scheiben mit einem Ring in Kontakt stehen, der mit an dem Träger der Antriebsachse angebrachten hydraulisch betätigten abgefederten Kolben in Berührung steht.

Bei einer vorteilhaften Ausführungsvariante sind im anderen Ende des Gehäuses zylindrische Öffnungen ausgebildet, in denen hydraulisch betätigte abgefederte Kolben sitzen, die in Kontakt mit einem Ring stehen, der mit den beweglichen Scheiben der Scheibenbremse in Berührung steht, deren feststehende Scheiben an einer Nabe mit inneren Keilschlitzen befestigt sind, die an dem Träger der Antriebsachse angebracht ist.

Das erfindungsgemäße Raduntersetzungsgetriebe für eine Antriebsachse hat einen einfachen, kompakten und fertigungsgerechten Aufbau. Für seine Herstellung ist ein wesentlich verringerter Aufwand an Metall erforderlich.

Anhand eines Ausführungsbeispiels wird die Erfindung näher erläutert. Es zeigen:

Fig. 1 im Längsschnitt eine erste Ausführungsform eines Raduntersetzungsgetriebes und

Fig. 2 wie Fig. 1 eine zweite Ausführungsform des Raduntersetzungsgetriebes.

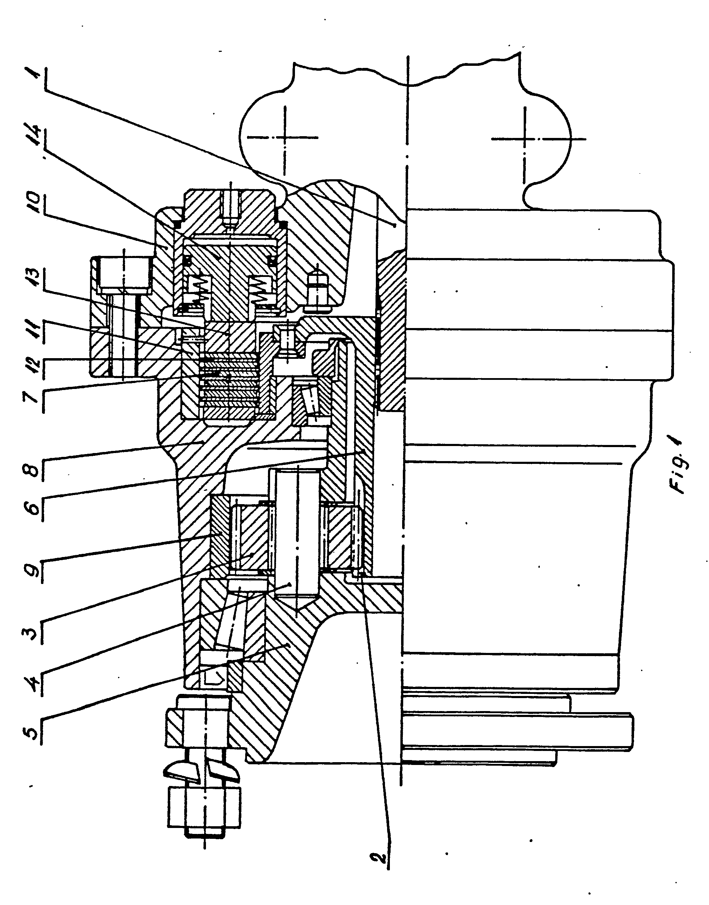

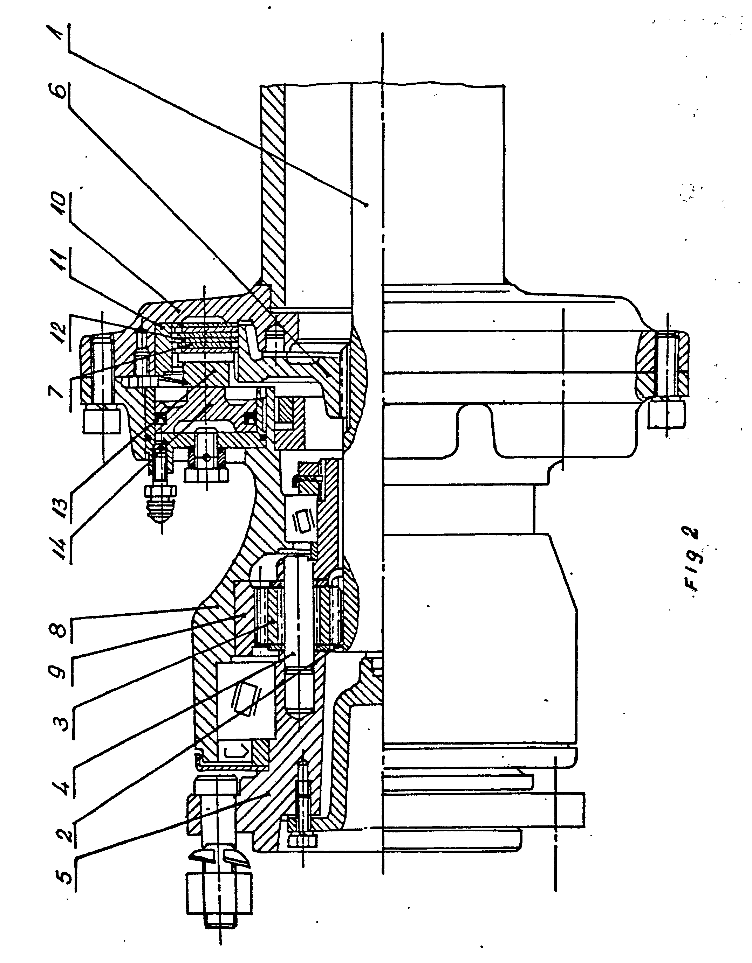

Das in den Zeichnungen gezeigte Raduntersetzungsgetriebe für eine Antriebsachse hat eine Halbwelle 1 mit einem zentralen Zahnrad 2 eines Planetengetriebes. Das zentrale Zahnrad 2 kann entweder direkt am Ende der Halbwelle 1 ausgebildet sein (Fig. 2), oder auf einer hohlen Nabe sitzen, die mit Keilschlitzen auf der Halbwelle 1 gehalten ist (Fig. 1). Mit dem zentralen Zahnrad 2 stehen Satellitenzahnräder 3 im Eingriff, die mit Achsen 4 an einem Steg 5 angebracht sind. An der Halbwelle 1 sind mit Keilschlitznaben 6 bewegliche Scheiben 7 einer hydraulisch betätigbaren Scheibenbremse festgelegt. Die Achsen 4 der Satellitenzahnräder 3 sind auf beiden Seiten in dem Steg 5 befestigt, der die Rolle einer Nabe für das Befestigen des Laufrads spielt. Der Steg 5 ist auf beiden Seiten im Gehäuse 8 gelagert, in dessen einem Ende ein Zahnkranz 9 des Planetengetriebes starr befestigt ist, während sein anderes Ende an den Träger 10 der Antriebsachse befestigt ist. Im anderen Ende des Gehäuses 8 ist in der Nähe des Trägers 10 der Antriebsachse mit Innenkeilschlitzen eine Nabe 11 befestigt, welche feststehende Scheiben 12 der Scheibenbremse trägt. Die beweglichen Scheiben 7 stehen in Kontakt mit einem Ring 13, der seinerseits mit hydraulisch betätigten abgefederten Kolben 14 in Berührung steht. Diese Kolben 14 sitzen in zylindrischen Öffnungen im Träger 10 der Antriebsachse.

Bei der in Fig. 2 gezeigten Ausführungsform sind im anderen Ende des Gehäuses 8 zylindrische Öffnungen ausgebildet, in denen hydraulisch betätigte abgefederte Kolben 14 sitzen, die in Kontakt mit dem Ring 13 stehen, der seinerseits mit den beweglichen Scheiben 7 der Scheibenbremse in Berührung steht, deren feststehende Scheiben mit inneren Keilschlitzen auf der Nabe 11 gehalten sind, die an dem Träger 10 der Antriebsachse angebracht ist.

Das Raduntersetzungsgetriebe für die Antriebsachse arbeitet folgendermaßen:

Die Halbwelle 1, die von dem Hauptantrieb angetrieben wird, treibt über das zentrale Zahnrad 2, die Satellitenzahnräder 3 mit ihren Achsen 4 und den Zahnkranz 9 den Steg 5 an, an dem das Laufrad befestigt ist. Falls ein Bremsen erforderlich ist, wird Bremsflüssigkeit unter Druck zu den hydraulisch betätigten abgefederten Kolben 14 gefördert, die über den Ring 13 die beweglichen Scheiben 7 und die feststehenden Scheiben 12 während des Bremsvorgangs gegeneinanderdrücken.

## Patentansprüche

1. Raduntersetzungsgetriebe für eine Antriebsachse, welches eine Halbwelle (1) mit einem zentralen Zahnrad (2) eines Planetengetriebes aufweist, mit Satellitenzahnrädern, (3) deren Achse (4) an einem Steg (5) befestigt sind, wobei an der Halbwelle (1) mit einer Keilschlitznabe bewegliche Scheibe (7) einer Scheibenbremse mit hydraulischer Betätigung angebracht sind, dadurch gekennzeichnet, daß die Achsen (4) der Satellitenzahnräder (3) beidseitig in dem Steg (5) befestigt sind, der seinerseits beidseitig in einem Gehäuse (8) gelagert ist, in dessen einem Ende ein Zahnkranz (9) des Planetengetriebes starr befestigt ist, und dessen anderes Ende an dem Träger (10) der Antriebsachse befestigt ist.

2. Raduntersetzungsgetriebe nach Anspruch 1, dadurch gekennzeichnet, daß im anderen Ende des Gehäuses (8) eine Nabe (11) mit inneren Keilschlitzen befestigt ist, welche die feststehenden Scheiben (12) der Scheibenbremse trägt, während ihre beweglichen Scheiben (7) mit einem Ring (13) in Kontakt stehen, der mit an dem Träger (10) der Antriebsachse angebrachten hydraulisch betätigten abgefederten Kolben (14) in Berührung steht.

3. Raduntersetzungsgetriebe nach Anspruch 1, dadurch gekennzeichnet, daß im anderen Ende des Gehäuses (8) zylindrische Öffnungen ausgebildet sind, in denen hydraulisch betätigte abgefederte Kolben (14) sitzen, die in Kontakt mit einem Ring (13) stehen, der mit den beweglichen Scheiben (7) der Scheibenbremse in Berührung steht, deren feststehende Scheiben (12) an einer Nabe (11) mit inneren Keilschlitzen befestigt sind, die an dem Träger (10) der Antriebsachse angebracht ist.

## Claims

1. Reducing gear wheel unit for a drive axle, which unit has a half shaft (1) with a central toothed wheel (2) of a planetary gear unit, having satellite toothed wheels (3), the axles (4) of which are secured to a flange (5), there being provided on the half shaft (1) disc brake discs (7) with hydraulic actuation, moveable by means of a splined collar, characterised in that the axles (4) of the satellite toothed wheels (3) are secured on both sides in the flange (5) which, for its part, is mounted on both sides in a housing (8), in the one end of which there is rigidly secured a toothed ring (9) of the planetary gear unit and the other end of which is secured to the support (10) of the drive axle.

2. Reducing gear wheel unit according to claim 1, characterised in that there is secured in the other end of the housing (8) a collar (11) with internal splined slots, which collar supports the fixed discs (12) of the disc brake, whilst its movable discs (7) are in contact with a ring (13) which is in contact with hydraulically actuated spring-mounted pistons (14) provided on the support (10) of the drive axle.

3. Reducing gear wheel unit according to claim 1, characterised in that there are forced in the other end of the housing (8) cylindrical openings in which there sit hydraulically actuated spring-mounted pistons (14) which are in contact with a ring (13) which is in contact with the movable discs (7) of the disc brake, the fixed discs (12) of which are secured to a collar (11) with internally splined slots, said collar being provided on the support (10) of the drive axle.

## Revendications

1. Démultiplicateur à pignons pour un arbre d'entraînement, comportant un demi-arbre (1) qui comprend un pignon central (2) d'un mécanisme planétaire comportant des pignons satellites (3) dont les axes (4) sont fixés à un corps (5), des disques (7) d'un frein à disques à commande hydraulique, mobiles avec un moyeu à cannelures, étant montés sur le demi-arbre, caractérisé en ce que les axes (4) des pignons satellites (3) sont fixés des deux côtés dans le corps (5) qui est quant à lui logé des deux côtés dans un carter (8) dans l'une des extrémités duquel est solidairement fixée une couronne dentée (9) du mécanisme planétaire et dont l'autre extrémité est fixée au support (10) de l'arbre d'entraînement.

2. Démultiplicateur à pignons selon la revendication 1, caractérisé en ce qu'à l'autre extrémité du carter (8), est fixé un moyeu (11) comportant des cannelures internes et portant les disques fixes (12) du frein à disques, dont les disques mobiles (7) sont en contact avec un anneau (13) lui-même en contact avec des pistons (14) à commande hydraulique et à ressort montés sur le support (10) de l'arbre d'entraînement.

3. Démultiplicateur à pignons selon la revendication 1, caracérisé en ce que dans l'autre extrémité du carter (8) sont formées des ouvertures cylindriques dans lesquelles sont logés des pistons (14) à commande hydraulique et à ressort, qui sont en contact avec un anneau (13) lui-même en contact avec les disques mobiles (7) du frein à disques dont les disques fixes (12) sont fixés sur un moyeu (11) comportant des cannelures internes et monté sur le support (10) de l'arbre d'entraînement.

Fig. 1

5 4 3 9 6 8 7 12 11 13 10 14 1

2

0 189 892

Fig 2